## Europäisches Patentamt
## European Patent Office
## Office européen des brevets

(19)

(11) Publication number: **0 216 791**
**B1**

# EUROPEAN PATENT SPECIFICATION

(12)

(45) Date of publication of patent specification :
**15.03.89**

(21) Application number : **86900820.1**

(22) Date of filing : **28.01.86**

(86) International application number :
**PCT/GB 86/00051**

(87) International publication number :
**WO/8604572 (14.08.86 Gazette 86/18)**

(51) Int. Cl.⁴ : **B 67 D   5/28**, B 67 D   5/30

(54) **METERED LIQUID DELIVERY SYSTEMS.**

(30) Priority : **01.02.85 GB 8502580**

(43) Date of publication of application :
**08.04.87 Bulletin 87/15**

(45) Publication of the grant of the patent :
**15.03.89 Bulletin 89/11**

(84) Designated contracting states :
**AT BE CH DE FR GB IT LI LU NL SE**

(56) References cited :
**US–A– 3 638 832**
**US–A– 4 442 953**

(73) Proprietor : **KODAK LIMITED**
**P.O. Box 66 Station Road**
**Hemel Hempstead Herts, HP1 1JU (GB)**
**GB**
**EASTMAN KODAK COMPANY**
**343 State Street**
**Rochester New York 14650 (US)**
**BE CH DE FR IT LI LU NL SE AT**

(72) Inventor : **GREEN, Andrew**
**36 Kings Way**
**Harrow Middlesex (GB)**
Inventor : **ARMITAGE, David, Hugh**
**1 Vicarage Lane Wing Leighton Buzzard**
**Bedfordshire LU7 ONU (GB)**

(74) Representative : **Davis, Ian Ellison et al**
**Kodak Limited Patent Department Headstone Drive**
**Harrow Middlesex HA1 4TY (GB)**

Jouve, 18, rue St-Denis, 75001 Paris, France

## Description

The present invention relates to liquid delivery systems in which it is desired to deliver small volumes of liquid reliably and accurately.

Accurate metering pumps are known and are expensive ; even so, known metering pumps are not able to deliver small varying amounts of liquid accurately and reproducibly.

US-A-4442953 shows an apparatus for supplying fluid, in which the motor of a fluid supplying pump is stopped when the supplied quantity of fluid is less than a preset quantity by an estimated oversupply quantity of fluid. The estimated oversupply quantity is set to a quantity equal to that supplied by the pump after the motor has been stopped from being driven and rotates by inertia. However, there is no provision for any adjustment of the estimated oversupply quantity in response to actual oversupply quantities subsequently delivered.

An object of the present invention is the provision of simple inexpensive apparatus for accurately and reliably delivering varying amounts of liquid.

According to the present invention, there is provided an apparatus for delivering a desired volume of liquid comprising delivery means arranged, upon actuation, to deliver the liquid, measuring means for measuring the rate of delivery of the liquid, means for producing a cumulative signal indicative of the volume of liquid delivered, and means for deactuating the delivery means when the signal indicates a volume of liquid delivered less by a predetermined amount than the volume of liquid desired to be delivered, characterised in that the cumulative signal producing means is also arranged to produce a second cumulative signal indicative of the volume of the liquid delivered after deactuation of the delivery means, in that comparator means is provided for comparing the second cumulative signal with a stored signal corresponding to said predetermined amount and for producing an error signal, and in that memory means is provided for storing said stored signal and for adjusting the stored signal, and consequently the predetermined amount, on a next delivery, in accordance with the error signal.

In a preferred embodiment, the apparatus includes a microprocessor for receiving the second cumulative signal, for comparing such signal with the stored signal, for producing the error signal and for adjusting the stored signal, and consequently the predetermined amount, in readiness for a next liquid delivery.

The delivery means may comprise a solenoid operated valve controlling a gravity feed of the liquid, or alternatively may comprise a pump.

Advantageously, the measuring means comprises a turbine flow meter arranged, on rotation, to produce a series of pulses corresponding to the volume of liquid flowing therethrough.

Using such an apparatus enables low cost components to be used. Initial calibration (determination of the predetermined amount) to cater for the inertia of the system, enables any error for a particular delivery to be kept at a very low level and, furthermore, the error is not cumulative, the feed back arrangement ensuring that correction takes place upon each delivery of liquid.

According to the present invention there is also provided a method of delivering a desired volume of liquid, comprising the steps of determining the inertia of a liquid delivery system and deactuating delivery means when the delivery system has delivered less than the desired volume of liquid by an amount determined by the inertia, characterised by determining the exact volume delivered and correcting the value allocated to inertia in dependence upon any difference between the desired volume and the exact volume of the liquid delivered.

The present invention will be described further, by way of example, with reference to the accompanying drawing in which the single figure is a diagrammatic representation of an apparatus for delivering liquid in accordance with the present invention.

As shown in the drawing, a liquid delivery apparatus comprises a tank 10 for containing liquid 11 to be delivered. The liquid 11, in the described example, is a concentrated solution of a developer replenisher which is to be delivered to and to replenish photographic developer in a bath 13.

The tank 10 is connected to the bath 13 by a gravity feed pipe 14 including a solenoid operated valve 15 and a turbine flow meter 16. The valve 15 is opened by control means 17 to allow replenisher 11 to flow under gravity through the flow meter 16 to the bath 13. As the replenisher passes through the flowmeter 16, the turbine of the latter rotates and produces a plurality of electrical pulses proportional to the quantity of liquid flowing therethrough. The electrical pulses are fed to the control means 17.

The control means 17 includes a microprocessor and an input unit 18, which may be manual, e. g. a keyboard, or automatic, e. g. sensing means (shown dotted) in the bath 13 which determines the depletion of developer 12 and the desired volume of developer replenisher 11 to be fed from the tank 10. The microprocessor converts the input (manual or automatic) into a number corresponding to an appropriate number of pulses generated by the turbine flowmeter 16 and in turn corresponding to a volume of liquid 11 flowing therethrough. However, a simple system as described above has inertia and liquid 11 continues to flow after deactuation of the valve 15 by the control means 17. The inertia of the system is due to the opening and closing times of the valve 15, the inertia of the flowmeter 16 per se, the gravity head under which the liquid 11 is fed which in itself varies as the level of liquid 11 in the tank 10 drops and any temporary changes in the resistance to flow of the liquid 11 from the tank 10 to the bath 13.

The inertia of the system is measurable by a count of pulses from the flowmeter 16 after deactuation of the valve 15. This count is stored in the memory of the microprocessor and is deductable from the number determined by the input (manual or automatic) and the microprocessor is arranged to deactuate the valve 15 after receiving a number of pulses from the flow meter 16 equal to the number determined by the input less the stored count.

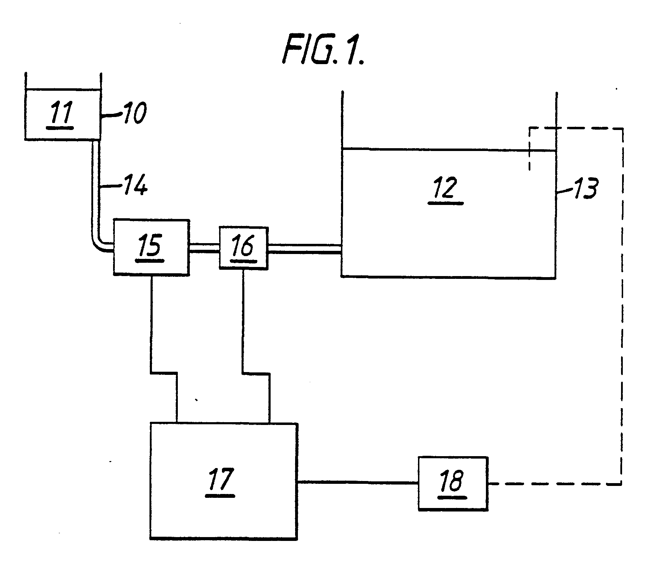

For example, in use, an operator (or automatic sensing means) determines that 60 mls of developer replenisher liquid 11 need be added to the bath 13. This figure 60 is input to the microprocessor through the input 18. The microprocessor converts this to an equivalent number of pulses to be received from the flowmeter 16. In this example the flowmeter produced 10 pulses per millilitre.

A count of 600 pulses from the flowmeter 16 would, were it not for the inertia of the system, indicate delivery of the correct volume (60 mls) of liquid 11. By calibration, it is found that the inertia of the system is equal (under set conditions) to 40 pulses and this number is stored in the memory of the microprocessor.

The microprocessor actuates the valve 15, counts 560 (600-40) pulses from the flow meter 16 and then deactuates the valve 15. The flowmeter 16 should, due to inertia, then produce a further 40 pulses giving a total of 600 pulses and delivery of 60 mls of replenisher liquid 11.

The microprocessor counts the pulses from the flow meter 16 after deactuation of the valve 15. If 40 further pulses are generated, an exact 60 mls of the liquid has been delivered. It is unlikely that 40 further pulses will be generated due to the varying inertia of the system. The number of further pulses generated is compared with the number stored in the microprocessor memory, in this case the exemplified number 40. An error signal is produced which adjusts the number stored in the microprocessor memory. The adjusted number is used on the next delivery. The system is self correcting due to this feedback. If too little liquid 11 was dispensed the first time, on a next delivery, an extra amount of liquid 11 is dispensed equal to the first delivery shortfall.

The present invention is not confined to the precise details of the foregoing example and variation may be made thereto. For instance, the valve 15 may be replaced by a simple pump providing a pumped feed instead of a gravity feed. Any kind of flowmeter can be used which provides an output indicative of the volume of liquid flowing therethrough. The microprocessor may be replaced by constituent electronic parts, counter, comparator, memory and trigger devices. Developer depletion may be sensed by level sensing means, ion-selective electrodes, photoresponsive devices examining processed material and/or on a time-dependent basis.

The present invention is also applicable to apparatus, other than photographic processing apparatus, in which small quantities of liquid are to be delivered reliably and accurately.

## Claims

1. An apparatus for delivering a desired volume of liquid comprising delivery means (15) arranged, upon actuation, to deliver the liquid, measuring means (16) for measuring the rate of delivery of the liquid, means (17) for producing a cumulative signal indicative of the volume of liquid delivered, and means (17) for deactuating the delivery means (15) when the signal indicates a volume of liquid delivered less by a predetermined amount than the volume of liquid desired to be delivered, characterised in that the cumulative signal producing means (17) is also arranged to produce a second cumulative signal indicative of the volume of the liquid delivered after deactuation of the delivery means (15), in that comparator means is provided for comparing the second cumulative signal with a stored signal corresponding to said predetermined amount and for producing an error signal, and in that memory means (17) is provided for storing said stored signal and for adjusting the stored signal, and consequently the predetermined amount, on a next delivery, in accordance with the error signal.

2. An apparatus according to claim 1 comprising a microprocessor for receiving the second cumulative signal, for comparing such signal with the stored signal, for producing the error signal and for adjusting the stored signal, and consequently the predetermined amount, in readiness for a next liquid delivery.

3. An apparatus according to claim 1 or 2 wherein the delivery means (15) comprises a solenoid operated valve controlling a gravity feed of the liquid.

4. An apparatus according to claim 1 or 2 wherein the delivery means (15) comprises a pump.

5. An apparatus according to claim 1 or 2 wherein the measuring means (16) comprises a turbine flow meter arranged, on rotation, to produce a series of pulses corresponding to the volume of liquid flowing therethrough.

6. An apparatus for controlling replenishment (11) of photographic processing solution (12) in a photographic processing bath (13) comprising apparatus according to any one of claims 1 to 5.

7. A method of delivering a desired volume of liquid (11), comprising the steps of determining the inertia of a liquid delivery system and deactuating delivery means (15) when the delivery system has delivered less than the desired volume of liquid (11) by an amount determined by the inertia, characterised by determining the exact volume delivered and correcting the value allocated to inertia in dependence upon any difference between the desired volume and the exact volume of the liquid delivered.

**Patentansprüche**

1. Vorrichtung für die Abgabe eines gewünschten Flüssigkeitsvolumens, mit Abgabemitteln (15), die nach ihrer Betätigung die Flüssigkeit abgeben, einer Meßeinrichtung (16) zum Messen des Flüssigkeitsdurchsatzes, einer Einrichtung (17) zur Erzeugung eines dem abgegebenen Flüssigkeitsvolumen entsprechenden Kumulativsignals sowie einer Einrichtung (17) zum Abschalten der Abgabemittel (15), wenn das Signal die Abgabe eines Flüssigkeitsvolumens anzeigt, das um eine bestimmte Menge unter dem gewünschten Flüssigkeitsvolumen liegt, dadurch gekennzeichnet, daß die Einrichtung (17), zur Erzeugung des Kumulativsignals ein zweites Kumulativsignal erzeugt, das dem nach Abschalten der Abgabemittel (15) abgegebenen Flüssigkeitsvolumen entspricht, daß eine Vergleichseinrichtung vorgesehen ist, um das zweite Kumulativsignal mit einem gespeicherten Signal zu vergleichen, das der vorbestimmten Menge entspricht, und um ein Fehlersignal zu erzeugen, und daß eine Speichereinrichtung (17) vorgesehen ist, um das gespeicherte Signal zu speichern und das gespeicherte Signal, und dementsprechend die vorbestimmte Menge bei einer nächsten Abgabe gemäß dem Fehlersignal neu einzustellen.

2. Vorrichtung nach Anspruch 1, dadurch gekennzeichnet, daß ein Mikroprozessor vorgesehen ist, dem das zweite Kumulativsignal zugeführt wird und in dem dieses Signal mit dem gespeicherten Signal verglichen wird, um das Fehlersignal zu erzeugen und um das gespeicherte Signal, und dementsprechend die vorbestimmte Menge zur Vorbereitung einer nächsten Flüssigkeitsabgabe neu einzustellen.

3. Vorrichtung nach Anspruch 1 oder 2, dadurch gekennzeichnet, daß die Abgabemittel (15) ein magnetspulenbetätigtes Ventil umfassen, das eine Zuführung der Flüssigkeit durch Gefälle steuert.

4. Vorrichtung nach Anspruch 1 oder 2, dadurch gekennzeichnet, daß die Abgabemittel (15) eine Pumpe umfassen.

5. Vorrichtung nach Anspruch 1 oder 2, dadurch gekennzeichnet, daß die Meßeinrichtung (16) einen Turbinendurchflußmesser umfaßt, bei dessen Drehung eine Reihe von Impulsen entsteht, die dem durch den Durchflußmesser strömenden Flüssigkeitsvolumen entsprechen.

6. Vorrichtung zur Steuerung des Nachfüllens (11) einer fotografischen Entwicklerlösung (12) in einem fotografischen Entwicklerbad (13), welche die Vorrichtung gemäß einem der Ansprüche 1 bis 5 enthält.

7. Verfahren zur Abgabe eines gewünschten Flüssigkeitsvolumens (11), bei dem in mehreren Arbeitsschritten die Trägheit eines Flüssigkeitsabgabesystems bestimmt und Abgabemittel (15) abgeschaltet werden, wenn das Abgabesystem ein Volumen abgegeben hat, das um eine durch die Trägheit bestimmte Menge unter dem gewünschten Flüssigkeitsvolumen (11) liegt, dadurch gekennzeichnet, daß das genaue Abgabevolumen bestimmt und der für die Trägheit festgelegte Wert nach Maßgabe eines Unterschieds zwischen dem gewünschten Volumen und dem genauen Abgabevolumen der Flüssigkeit korrigiert wird.

**Revendications**

1. Appareil pour fournir une quantité voulue de liquide, comprenant des moyens de distribution (15) prévus pour, en cours d'activation, laisser passer le liquide, des moyens de mesure (16) pour mesurer la vitesse d'écoulement du liquide, des moyens (17) pour produire un signal cumulé représentant le volume de liquide écoulé et des moyens (17) pour désactiver les moyens de distribution (15) lorsque le signal indique un volume écoulé inférieur d'une quantité prédéterminée au volume à fournir que l'on souhaite, caractérisé en ce que les moyens (17) de production du signal cumulé sont aussi prévus pour produire un second signal cumulé indiquant le volume de liquide qui s'est écoulé après la désactivation des moyens de distribution (15), en ce que des moyens de comparaison sont prévus pour comparer le second signal cumulé avec un signal mémorisé correspondant à ladite quantité prédéterminée et pour produire un signal d'erreur, et en ce que le moyen (17) est prévu pour stocker ledit signal mémorisé, pour ajuster le signal mémorisé, et donc, par conséquent, pour ajuster la quantité prédéterminée en fonction du signal d'erreur en vue d'une prochaine séquence de distribution.

2. Appareil selon la revendication 1 comprenant un microprocesseur pour recevoir le second signal cumulé, pour comparer ce signal avec le signal mémorisé, pour produire le signal d'erreur, pour ajuster le signal mémorisé et par conséquent la quantité prédéterminée en vue d'une prochaine séquence de distribution.

3. Appareil selon la revendication 1 ou 2 caractérisé en ce que les moyens de distribution (15) comprennent une vanne électromagnétique contrôlant l'écoulement par gravité du liquide.

4. Appareil selon la revendication 1 ou 2 caractérisé en ce que les moyens de distribution (15) comprennent une pompe.

5. Appareil selon la revendication 1 ou 2 caractérisé en ce que les moyens de mesure (16) comprennent un débitmètre à turbine, en rotation, pour produire une série d'impulsions correspondant au volume de liquide s'écoulant au travers dudit débitmètre.

6. Appareil pour contrôler la régénération de la solution de traitement photographique (12) dans le bain de traitement photographique (13) comprenant un appareil selon l'une quelconque des revendications 1 à 5.

7. Procédé pour fournir une quantité voulue de liquide (11) comprenant les étapes suivantes :
- déterminer l'inertie du système de distribution du liquide,
- désactiver les moyens de distribution (15) lorsque le système de distribution a laissé passer un volume de liquide inférieur au volume désiré d'une quantité déterminée par l'inertie caractérisé en ce que l'on détermine le volume exact fourni et que l'on corrige la valeur attribuée à l'inertie du système en fonction de la différence entre le volume désiré et le volume réellement fourni.

## FIG.1.